## Europäisches Patentamt

## European Patent Office

## Office européen des brevets

(19)

(11) Numéro de publication: **0 098 621 B1**

(12)

# FASCICULE DE BREVET EUROPEEN

(45) Date de publication du fascicule du brevet:
**15.07.87**

(51) Int. Cl.⁴: **F 16 K 11/16, F 16 K 31/524**

(21) Numéro de dépôt: **83200099.6**

(22) Date de dépôt: **24.01.83**

(54) **Robinet mélangeur d'eau chaude et d'eau froide.**

(30) Priorité: **05.07.82 BE 208534**

(43) Date de publication de la demande:
**18.01.84 Bulletin 84/3**

(45) Mention de la délivrance du brevet:
**15.07.87 Bulletin 87/29**

(84) Etats contractants désignés:
**AT CH DE FR GB IT LI LU NL SE**

(56) Documents cités:
**CH - A - 444 072**
**DE - A - 1 450 464**
**FR - A - 807 032**
**FR - A - 1 188 365**
**FR - A - 1 257 738**
**FR - A - 1 307 336**
**FR - A - 1 395 726**
**FR - A - 1 408 753**
**FR - A - 1 561 423**
**US - A - 3 207 183**
**US - A - 3 403 700**

(73) Titulaire: **Bougard, Denise Léopoldine, épouse Raymond Goens, 12 Avenue Château de Walzin, B-1180 Bruxelles (BE)**

(72) Inventeur: **Bougard, Denise Léopoldine, épouse Raymond Goens, 12 Avenue Château de Walzin, B-1180 Bruxelles (BE)**

(74) Mandataire: **De Brabanter, Maurice et al, Bureau VANDER HAEGHEN 63 Avenue de la Toison d'Or, B-1060 Bruxelles (BE)**

ACTORUM AG

## Description

La présente invention a pour objet un robinet mélangeur d'eau chaude et d'eau froide comportant un corps monobloc, muni d'un bec mitigeur et, de part et d'autre du bec mitigeur, de deux tubulures pour le raccordement à un réseau de distribution d'eau chaude et à un réseau de distribution d'eau froide, un organe de réglage de la température de l'eau que l'on prélève, un premier obturateur disposé entre la tubulure de raccordement au réseau d'eau froide et le bec mitigeur et un second obturateur analogue au premier, disposé entre la tubulure de raccordement au réseau d'eau chaude et ledit bec mitigeur.

Elle concerne également un procédé pour établir et suspendre à volonté l'écoulement et la température de l'eau à l'aide du robinet susdit.

L'invention trouve son application principale dans les installations sanitaires pour mélanger deux liquides dans une proportion variable. Elle convient tout particulièrement aux chambres de malades dans les hôpitaux et aux lave-mains pour médecins dans les cabinets médicaux et les blocs opératoires.

On connaît par le brevet américain US-A-3 403 700 un robinet mélangeur d'eau chaude et d'eau froide correspondant au préambule de la revendication 1 et comportant un corps monobloc muni d'un bec mitigeur, de part et d'autre du bec mitigeur, de deux tubulures pour le raccordement à un réseau de distribution d'eau chaude et à un réseau de distribution d'eau froide. Ce robinet mélangeur connu présente deux boîtiers-obturateurs distincts, actionnés simultanément par un seul organe de réglage manuel manipulé d'une seule main. Les boîtiers-obturateurs sont mis en place en tant que tels, dans le corps du robinet, lors de l'assemblage de celui-ci en usine, le premier étant disposé entre la tubulure de raccordement au réseau d'eau froide et le bec mitigeur et le second entre la tubulure de raccordement au réseau d'eau chaude et ledit bec mitigeur. Ces obturateurs sont constitués chacun d'un clapet à pointeau monté sur une tige.

L'inconvénient majeur de ce robinet mélangeur connu réside dans le fait que le remplacement d'un boîtier usé ou défectueux nécessite la déconnection de l'une ou l'autre tubulure d'amenée d'eau du réseau de distribution et le démontage de certaines pièces du corps du robinet, pour pouvoir retirer le boîtier-obturateur. On observe également que la tige de guidage munie d'ailettes coulisse le long d'un manchon. Dans cette forme de réalisation, la tige de guidage a le désavantage d'être facilement bloquée par le calcaire.

Le brevet suisse CH-A-444 072 décrit un robinet mélangeur comportant deux clapets à pointeau actionnés simultanément par un seul organe de réglage manuel. La soupape, le siège et le ressort hélicoïdal sont montés dans un fourreau fileté extérieurement. Le remplacement du dispositif obturateur est rendu difficile. La tige de guidage, soutenue par une cloison intérieure, forme un tringlerie soumise à des vibrations violentes.

La présente invention, telle que caractérisée dans la revendication 1, vise à remédier à ces inconvénients. En outre, elle résout le problème du remplacement des boîtiers-obturateurs usés ou défectueux en rendant possible l'introduction des boîtiers-obturateurs dans le corps du robinet mélangeur, sans nécessiter la déconnection des tubulures des conduites d'eau.

Des modes particuliers de réalisation de l'invention apparaissent dans les revendications dépendantes.

L'invention propose de ménager dans le corps du robinet mélangeur des orifices de visite distincts des orifices de raccordement. Ces orifices de visite sont aisément accessibles par dévissage et retrait d'un bouchon de visite. Ils sont dimensionnés de telle manière que le boîtier-obturateur puisse être introduit et retiré tel quel du corps du robinet. Le remplacement d'un boîtier-obturateur défectueux est ainsi considérablement simplifié, puisqu'il n'est même pas nécessaire de déconnecter les tubulures de raccordement aux réseaux d'eau froide et d'eau chaude. Un contrôle visuel du dispositif d'obturation est également rendu possible.

La tige de guidage présente une forme cylindrique trapue dans laquelle sont ménagés des évidements en arcs de cercle, en vue de guider les filets d'eau et prévenir l'érosion.

L'ensemble des pièces constitutives du boîtier-obturateur, c'est-à-dire la soupape, la bague de siège, la tige de guidage et le ressort, sont montées dans une douille unique.

La chambre de mélange est constituée par la cavité de la came, ce qui permet de réaliser un bâti constitué d'une seule pièce, exempt de parois annulaires intermédiaires.

En dépit d'une apparence semblable, le robinet suivant l'invention se distingue par la réalisation d'un corps monobloc et la conception d'une tige de guidage assurant un fonctionnement exempt de vibrations et d'érosion, le profilage d'un siège et d'une soupape assurant une étanchéité parfaite pour des pressions d'eau élevée.

Selon l'invention, chaque boîtier-obturateur est constitué d'un siège et d'une soupape à portage conique solidaire d'un piston déposé au voisinage du bec mitigeur et commandé simultanément par une came actionnée à l'aide de l'organe de réglage unique susdit.

Suivant une particularité de l'invention, les obturateurs susdits sont du type «fermeture à pression d'eau».

Ces obturateurs sont avantageusement montés en vis-à-vis par rapport à la came de commande.

Dans une forme de réalisation particulière de l'invention, les pièces constitutives de chaque obturateur sont respectivement une douille cylindrique munie à une extrémité d'une cannelure d'agrippage et à l'autre extrémité d'un filet de raccord et d'une embase, et destinée à être montée sur une bague filetée servant de siège, ainsi qu'une soupape conique solidaire d'un piston pouvant coulisser le long de la bague et de la douille susdites.

Suivant une autre particularité de l'invention, les pièces constitutives de chaque obturateur sont maintenues en place par ladite douille et ladite bague, constituant un boîtier susceptible d'être introduit par un des orifices de visite ménagés de part et d'autre du corps du robinet susdit et d'être fixé par vissage et blocage dans le corps du robinet mélangeur susdit.

Le siège de chacun des obturateurs est avantageusement garni d'un joint élastique conique maintenu en place par une face latérale de la bague et par l'embase de la douille montée sur la bague susdite. Ce joint élastique a l'avantage d'offrir une obturation parfaitement étanche.

L'organe de réglage unique est avantageusement une manette, qui pivote de préférence autour d'un axe sensiblement vertical perpendiculaire à l'axe longitudinal du corps du robinet mélangeur.

L'invention permet d'établir et de suspendre à volonté l'écoulement et régler la température de l'eau que l'on prélève, à l'aide d'un robinet mélangeur d'eau chaude et d'eau froide. On transmet à l'aide d'une came actionnée par un organe de réglage unique un déplacement linéaire à au moins une des soupapes des obturateurs du robinet mélangeur susdit. On actionne la vanne susdite en faisant pivoter une manette autour d'un axe sensiblement vertical. On augmente avantageusement la force de rappel de chaque soupape à portage conique sur son siège à l'aide d'un ressort, agissant sur la base de la soupape.

D'autres détails et particularités de l'invention apparaîtront au cours de la description suivante d'une forme de réalisation préférée de l'invention, illustrée par les dessins ci-annexés.

Dans ces dessins:

— la figure 1 montre en perspective une forme de réalisation d'un robinet mélangeur suivant l'invention;

— la figure 2 est une coupe verticale du robinet mélangeur représenté à la figure 1;

— la figure 3 montre une soupape à portage conique solidaire d'un piston muni d'évidements en forme d'arcs de cercle;

— les figures 4 à 7 illustrent les diverses positions de la manette de réglage du robinet mélangeur représenté aux figures 1 et 2;

— la figure 8 montre le profil triangulaire de la came de commande des boîtiers-obturateurs;

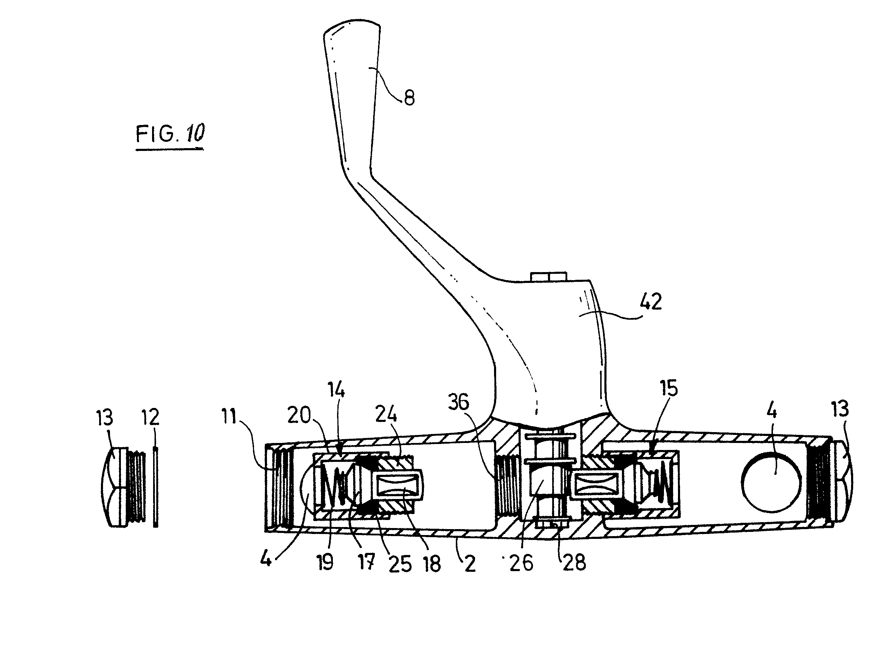

— les figures 9 et 10 illustrent la mise en place d'un boîtier-obturateur.

Dans ces différentes figures, les mêmes notations de référence désignent des éléments identiques ou analogues.

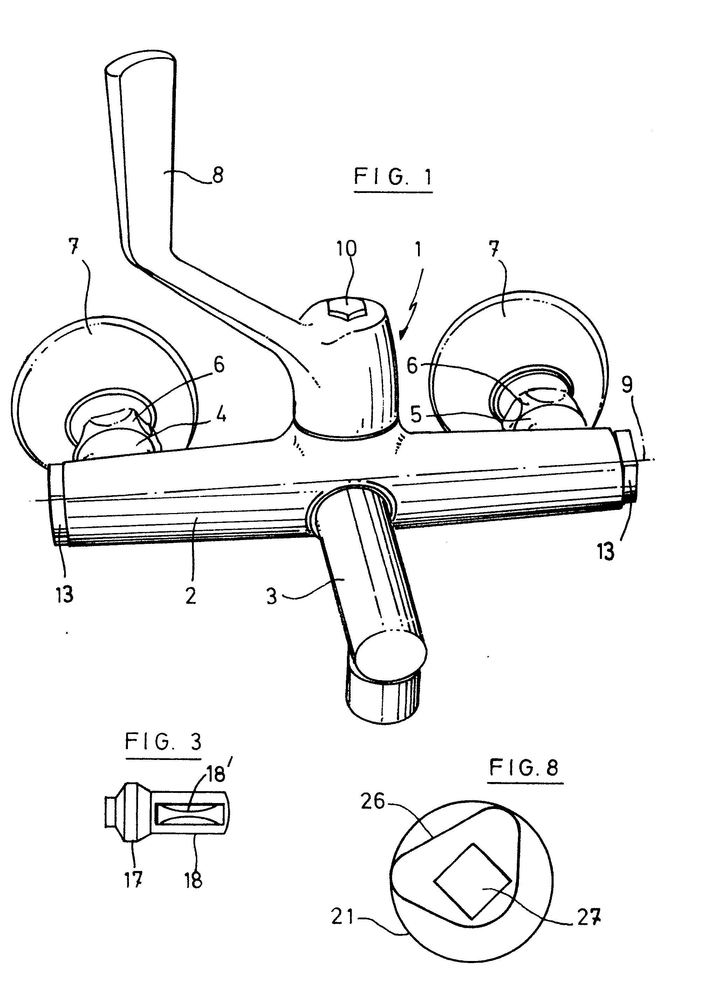

Comme montré à la figure 1, un robinet mélangeur suivant l'invention, désigné dans son ensemble par la notation de référence 1, comporte dans un mode de construction particulier un corps monobloc 2, muni d'un bec mitigeur 3 et, de chaque côté du bec mitigeur 3, de deux tubulures 4, 5 de raccordement à l'aide d'écrous de raccord 6 à un réseau de distribution d'eau chaude et à un réseau de distribution d'eau froide, dont les tuyaux non représentés sont cachés par deux disques en métal chromé 7.

Au milieu de la partie supérieure du bâti est montée une manette de réglage 8 pouvant pivoter autour d'un axe 9 sensiblement vertical. La manette de réglage 8 est fixée à l'aide d'une vis 10 à un arbre non montré, matérialisant l'axe 9 susdit.

Sur les faces latérales du corps du robinet sont prévus des orifices de visite 11 normalement bouchés chacun par un joint 12 et un bouchon de visite 13.

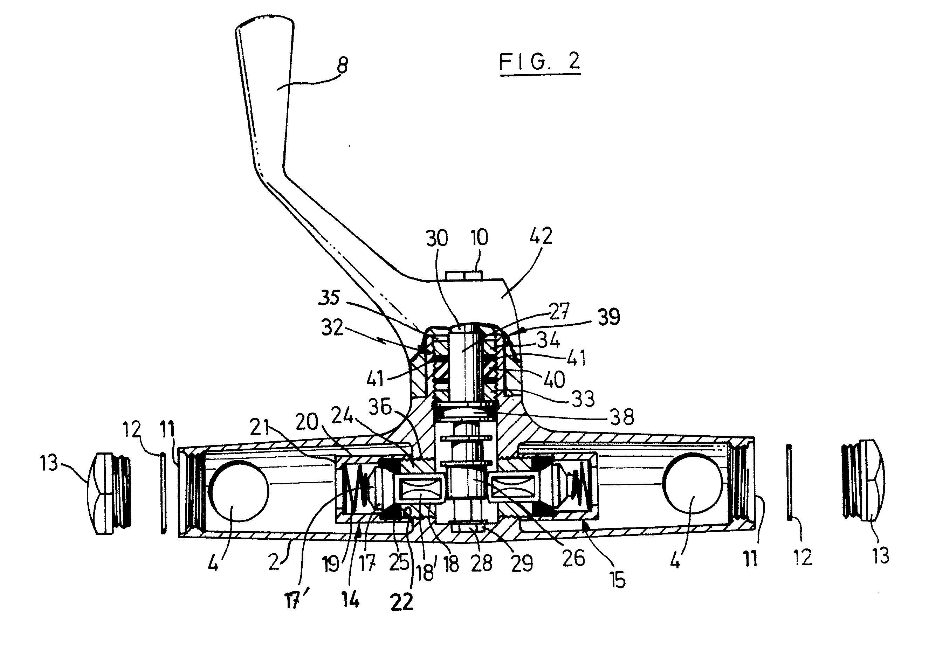

Une coupe verticale du robinet mélangeur susdit est montrée à la figure 2. Deux boîtiers-obturateurs 14, 15 sont montés de part et d'autre de l'axe 9 entre le bec mitigeur 3 et chaque tubulure 4, 5 de raccordement au réseau d'eau chaude et respectivement d'eau froide.

Chaque boîtier-obturateur 14, 15 est constitué d'un siège 25 et d'une soupape 17 à portage conique, solidaire d'une tige de guidage 18, disposé au voisinage du bec mitigeur 3. La soupape 17 présente une face sensiblement plane 17'.

Les boîtiers-obturateurs 14 et 15 sont commandés simultanément par une came 26 actionnée à l'aide de la manette de réglage unique 8.

Les pièces constitutives de chacun des boîtiers-obturateurs 14 et 15, c'est-à-dire les sièges 25, les soupapes 17, les tiges de guidage 18 et éventuellement les ressorts de rappels de fermeture 19, sont montées et maintenues en place dans une douille cylindrique 20 munie à une extrémité d'une cannelure 21 d'agrippage et à l'autre extrémité d'un filet de raccord 22 et d'une embase et destinée à être montée sur une bague filetée 24 servant de siège 25.

En outre, le siège de chacun des obturateurs 14, 15 est garni d'un joint conique 25 maintenu en place par une face latérale de la bague 24 et par l'embase de la douille cylindrique 20 montée sur la bague susdite.

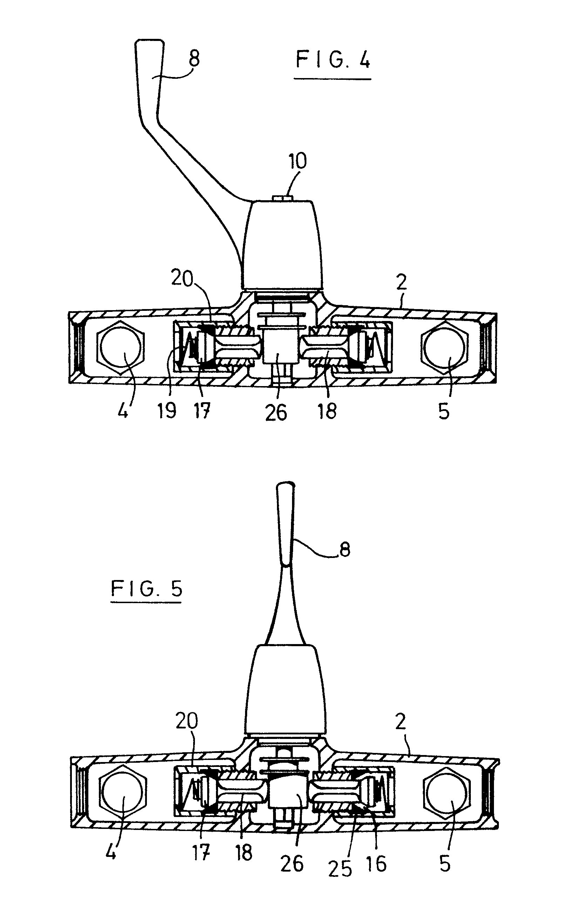

La tige du piston présente avantageusement des évidements en forme d'arcs de cercle 18' destinés à diriger les filets d'eau. Ces évidements réduisent le laminage et préviennent l'érosion du joint conique des sièges (figure 3).

Ladite came 26 est fixée sur un arbre 27 sensiblement vertical en laiton, monté à pivotement dans le corps monobloc 2 du robinet mélangeur 1 perpendiculairement au plan formé par l'axe longitudinal 9 et le bec mitigeur 3.

L'arbre 27 prend appui à une extrémité sur une butée 28 garnie d'une rondelle de butée 29 en matière synthétique et à l'autre extrémité sur une garniture d'étanchéité 32. Il présente à cette autre extrémité une échancrure 30 qui s'emboîte parfaitement dans un évidement 31 de la manette de réglage 8. La fixation de la manette de réglage 8 est réalisée simplement à l'aide d'une vis de fixation 10.

La garniture d'étanchéité 32 se compose d'une première bague 33 et d'une seconde bague 34 filetées extérieurement, munies sur une face supérieure d'une rainure de fixation 35 permettant de les visser à l'aide d'un outil approprié non montré, par exemple un large tournevis, dans une cavité filetée 36 du corps monobloc 2 du robinet mélangeur 1. La bague 34 sert d'appui à une double rondelle 37 qui est solidaire de l'arbre 20 et qui maintient en place un joint annulaire en caoutchouc ou «o-ring» 38.

La bague 33 sert également d'appui à une presse-étoupe 39 disposée au-dessus d'elle et destinée à renforcer l'étanchéité de l'«o-ring» 38. La presse-étoupe 39 comporte un joint de bourrage graphité 40 garni de part et d'autre d'une rondelle de cuir 41.

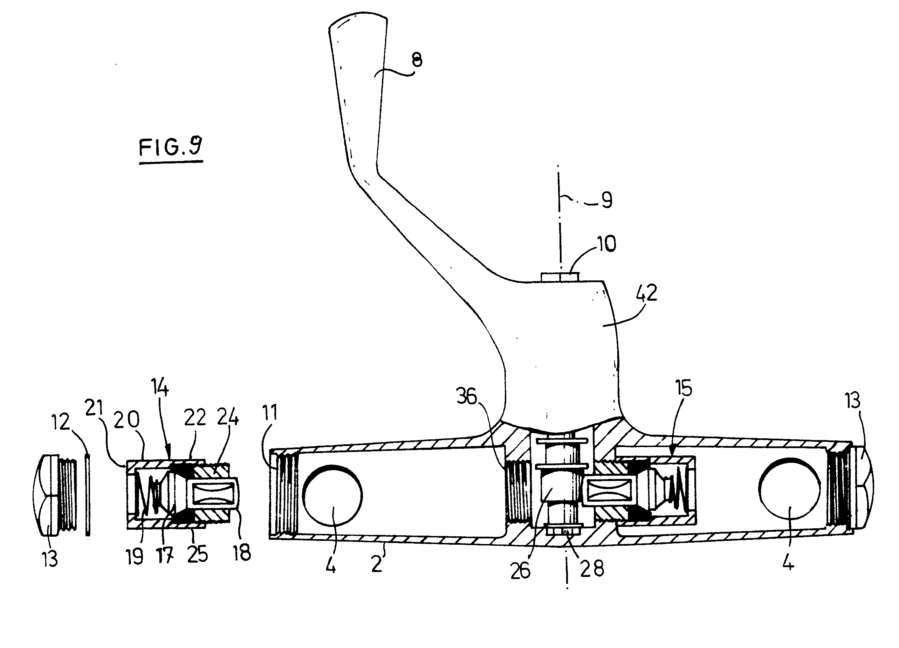

La seconde bague 34 sert de presse-bourrage et comprime le joint graphité 40. La manette de réglage présente un chapeau 42 qui recouvre la garniture d'étanchéité 32. La came 26 présente une section sensiblement triangulaire à coins arrondis comme montré à la figure 8. Cette came 26 agit éventuellement sur le piston 18 de chacun des obturateurs.

Le maniement du robinet mélangeur 1 selon l'invention est particulièrement simple et évident. Le fonctionnement est clairement illustré par les figures 3 à 6, montrant les diverses positions des obturateurs 14, 15 en fonction de la position de la manette de réglage 8.

La commande du robinet mélangeur est obtenue par actionnement d'une seule manette de réglage. Le pivotement de cette manette de réglage autour de l'axe vertical selon un angle de 120° permet le réglage à la fois du débit et de la température de l'eau.

Le positionnement de la manette peut se faire aisément à l'aide du coude ou de l'avant-bras. De ce fait, un chirurgien par exemple ne risque pas de se contaminer les mains dans un bloc opératoire muni de tels robinets.

La position initiale fermée du robinet est montrée à la figure 4. Le portage conique de la soupape 17 de chacun des boîtiers-obturateurs 14, 15 prend appui sur leur siège 16. Les soupapes 17 s'appuient sur les sièges sous l'effet de la pression d'eau qui s'exerce sur leur base sensiblement plane 17'. Eventuellement un ressort de rappel à la fermeture 33 exerce une poussée sur la base sensiblement plane de la soupape 17 susdite pour assurer une fermeture plus rapide en cas de faible pression de l'eau.

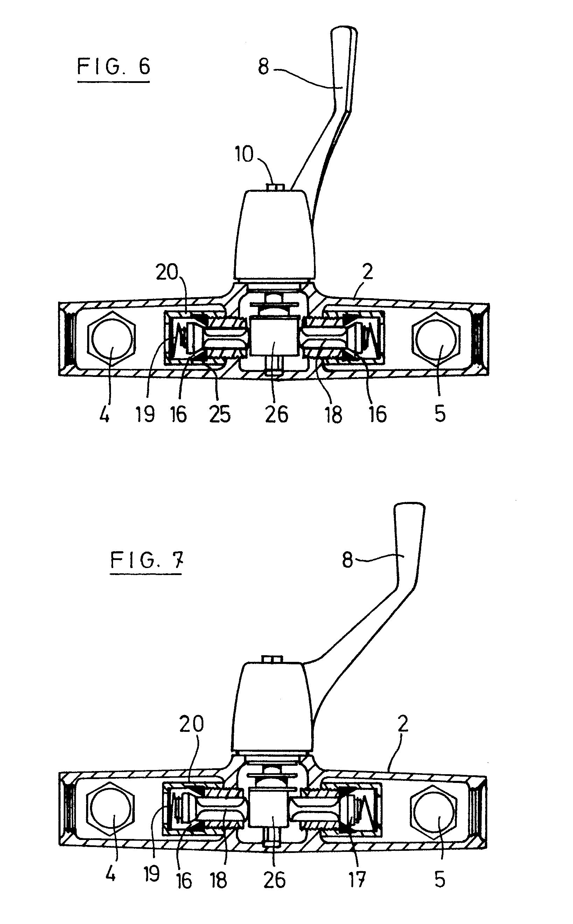

La manœuvre vers la droite de la manette de réglage donne successivement et progressivement d'abord de l'eau froide comme montré à la figure 5, ensuite de l'eau tiède à plein débit comme montré à la figure 6. En continuant la manœuvre de la manette dans le même sens de déplacement, on obtient de l'eau chaude à plein débit (figure 7). Les figures 4 à 6 susdites montrent le déplacement combiné des soupapes 17 des deux boîtiers-obturateurs 14, 15 en vue de mélanger dans des proportions variables l'eau froide et l'eau chaude.

La course de chacun des obturateurs constitué de l'ensemble clapet-piston qui coulisse le long du guide constitué par la douille 20 est d'environ un quart du diamètre de l'orifice du siège de l'obturateur 14, 15.

Suivant une particularité de l'invention, les pièces constitutives des boîtiers-obturateurs 14 et 15 sont d'un accès facile. Elles peuvent être introduites facilement dans le corps monobloc 2 du robinet 1 par un des orifices 11 prévus à cet effet après avoir ôté le bouchon de visite 13. Le montage de la douille 20 contenant les pièces constitutives de l'obturateur 14, 15 est exécuté par vissage sur la bague 24 à l'aide d'un outil de serrage non représenté s'adaptant dans les cannelures 21 de la douille 20. Le démontage s'effectue de manière analogue en dévissant la douille 20 susdite.

L'accès facile des obturateurs rend les opérations d'entretien très aisées.

La disposition particulière des soupapes au voisinage immédiat de la came et la forme particulière des pistons présentant des évidements en arc de cercle préviennent toute vibration lors de l'écoulement de l'eau.

Le robinet mélangeur suivant l'invention présente donc de nombreux avantages que l'on peut résumer comme suit:
— commande unique pour le réglage du débit et de la température;
— fonctionnement doux et sans chocs ni vibrations;
— jet non éclaboussant;
— étanchéité parfaite;
— entretien aisé.

## Revendications

1. Robinet mélangeur (1) d'eau chaude et d'eau froide comportant un corps (2) muni d'un bec mitigeur (3) et, de part et d'autre du bec mitigeur (3), de deux tubulures (4, 5) pour le raccordement à un réseau de distribution d'eau chaude et à un réseau de distribution d'eau froide, et comportant un organe de réglage manuel unique (8) qui, manipulé d'une seule main, pivote sur lui-même et actionne, par l'intermédiaire d'un arbre (27) solidaire d'une came de réglage (26), simultanément des tiges de guidage (18) de deux boîtiers obturateurs (14, 15) susceptibles d'être montés et démontés dans le corps du robinet et disposés en vis-à-vis, de part et d'autre du bec mitigeur (3) entre celui-ci et chacun des raccords des tubulures de raccordement, chacun des boîtiers obturateurs (14, 15) comprenant une soupape (17) à portage conique qui se ferme sous l'effet de la pression de l'eau entrant et à l'aide d'un ressort (19) agissant sur la base de la soupape (17), qui est solidaire de sa tige de guidage (18) munie de moyens pour permettre le passage de l'eau, ladite soupape (17) pouvant coulisser dans une douille cylindrique (20), caractérisé en ce qu'il comporte un corps monobloc (2), muni latéralement de chaque côté du bec mitigeur (3) d'un bouchon de visite (13) obturant des orifices de visites (11) distincts des raccords des tubulures de raccordement (4, 5), en ce que chaque boîtier-obturateur (14, 15) est constitué de la douille cylindrique (20) qui est munie à une extrémité d'un épaulement (21) et à l'autre extrémité d'une bague de guidage (24) fixée dans ladite douille cylindrique (20) par filetage, servant de siège (16) à la soupape (17), en ce que dans chaque douille cylindrique (20) sont montés et maintenus en alignement successivement le ressort (19), la soupape à portage conique (17) avec sa tige de guidage (18) et la bague de guidage (24), et en ce que chaque boîtier obturateur (14, 15) puisse être introduit ou retiré tel quel du corps (2) du robinet dans lequel il est fixé par vissage, sans qu'il soit nécessaire de déconnecter les tubulures de raccordement (4, 5) aux réseaux d'eau froide et d'eau chaude.

2. Robinet mélangeur suivant la revendication 1, caractérisé en ce que le siège de chacun des boîtiers obturateurs (14, 15) est prévu d'un joint conique (25) maintenu en place par une face latérale de la bague de guidage (24) et par l'embase de la douille cylindrique (20).

3. Robinet mélangeur suivant l'une quelconque des revendications précédentes, caractérisé en ce que chaque tige de guidage (18) présente des évidements en arcs de cercle prévus pour le passage de l'eau.

4. Robinet mélangeur suivant l'une quelconque des revendications précédentes, caractérisé en ce que l'organe de réglage unique est une manette (8).

**Claims**

1. A mixing valve (1) for hot and cold water comprising a body (2) provided with a mixing tap spout (3) and, on either side of the mixing tap spout (3), two pipes (4, 5) for connection to a supply system for hot water and a supply system for cold water and comprising a single manual adjusting mechanism (8) which, operated by one single hand, pivots on itself and activates simultaneously, by means of a shaft (27) integral with an adjusting cam (26), guide rods (18) in two retaining casings (14, 15) which are capable of being fitted in, and removed from, the body of the valve and are arranged opposite each other, on either side of the mixing tap spout (3) between the latter and each of the connections of the connecting pipes; each of the retaining casings (14, 15) comprising a valve member (17) with a conical bearing, which valve member (17) closes under the effect of the pressure of water entering and with the aid of a spring (19) acting on the base of the valve member (17) which is integral with its guide rod (18) provided with means to permit the passage of water, said valve member (17) being able to slide to a cylindrical socket (20), which valve is characterised: in that it is formed of a unitary body (2) provided laterally on each side of the mixing tap spout (3) with an inspection plug (13), which seals inspection openings (11), separate from the connections of the connecting pipes (4, 5); in that each retaining casing (14, 15) is constituted by the cylindrical socket (20) which is provided, at one end, with a shoulder (21) and, at the other end, with a guide ring (24) fixed in the cylindrical socket (20) through threading, serving as a seat (16) for the valve member (17); in that fitted and held in alignment successively in each cylindrical socket (20) there are the spring (19), the valve member (17) with a conical bearing, its guide rod (18) and the guide ring (24); and in that each retaining casing (14, 15) just as it is may be introduced into or withdrawn from the body (2) of the valve in which it is fixed through a screw action without it being necessary to disconnect the connecting pipes (4, 5) to the systems for hot and cold water.

2. A mixing valve according to claim 1, characterised in that each retaining casing (14, 15) has a seat provided with a conical joint (25) held in place by means of a lateral face of the guide ring (24) and by the base of the cylindrical socket (20).

3. A mixing valve according to claim 1 or 2, characterised in that each guide rod (18) has recesses, shaped as arcs of a circle, provided for the passage of water.

4. A mixing valve according to any preceding claim, characterised in that the single adjusting mechanism is an operating lever (8).

**Patentansprüche**

1. Mischventil (1) für Warm- und Kaltwasser, mit einem Körper (2), welcher eine Mischtülle (3) und auf beiden Seiten der Mischtülle zwei Rohransätze (4) für den Anschluss an ein Warmwasser- und ein Kaltwasserverteilungsnetz aufweist, weiters mit einem einzigen Regelorgan (8), welches sich bei Bedienung mit einer Hand um sich selbst dreht und über eine Welle (27), welche mit einem Regelungsnocken (26) verbunden ist, gleichzeitig die Führungsstäbe (18) zweier Ventilgehäuse (14, 15) betätigt, die im Körper des Mischventils an- und abmontierbar und zu beiden Seiten der Mischtülle (3) einander gegenüberliegend zwischen der Mischtülle und den Anschlüssen der Rohransätze angeordnet sind, wobei jedes Ventilgehäuse (14, 15) ein Ventil (17) in konischer Ausführung aufweist, welches sich unter der Wirkung des eintretenden Wassers und einer auf die Grundfläche des Ventils (17) einwirkenden Feder (19) schliesst, wobei die Grundfläche des Ventils mit dem entsprechenden Führungsstab (18) verbunden ist, welcher den Durchfluss des Wassers ermöglichende Einrichtungen aufweist, und das Ventil (17) in einer zylindrischen Hülse (20) verschiebbar ist, dadurch gekennzeichnet, dass das Mischventil einen einstückigen Körper (2) aufweist, der seitlich zu beiden Seiten der Mischtülle (3) mit einem Kontrollverschluss (13) versehen ist, welcher Kontrollöffnungen (11) abschliesst, die von den Anschlüssen der Rohransätze (4) abgesetzt sind, dass jedes Ventilgehäuse aus der zylindrischen Hülse (20) besteht, welche an einem Ende eine Schulter (21) und am anderen Ende einen Führungsring (24) aufweist, der durch ein als Sitz für das Ventil (17) dienendes Gewinde in der zylindrischen Hülse (20) befestigt ist, dass in jeder zylindrischen Hülse (20) die Feder (19), das konisch ausgebildete Ventil (17) mit seinem Führungsstab (18) und der Führungsring (24) in dieser Reihenfolge angeordnet und gehalten sind, und dass jedes Ventilgehäuse (14, 15) in den Körper (2) des Mischventils, in dem es durch Verschraubung fixiert ist, eingeführt bzw. aus diesem Körper entfernt werden kann, ohne dass dabei ein Abtrennen der Rohransätze (14, 15) zu den Warm- und Kaltwasserleitungsnetzen erforderlich ist.

2. Mischventil nach Anspruch 1, dadurch gekennzeichnet, dass der Sitz jedes Ventilgehäuses (14, 15) ein konisches Anschlussstück (25) aufweist, welches durch eine Seitenfläche des Führungsringes (24) und durch die Grundplatte der zylindrischen Hülse (20) an Ort und Stelle gehalten wird.

3. Mischventil nach einem der vorangegangenen Ansprüche, dadurch gekennzeichnet, dass jeder Führungsstab (18) kreisbogenförmige Ausnehmungen aufweist, welche für den Durchfluss des Wassers vorgesehen sind.

4. Mischventil nach einem der vorangegangenen Ansprüche, dadurch gekennzeichnet, dass das einzige Regelorgan ein Handgriff (8) ist.

FIG. 1

FIG. 3

FIG. 8

F I G. 2

0 098 621

FIG. 4

FIG. 5

FIG. 6

FIG. 7

FIG.9

FIG. 10